# NEUE EUROPÄISCHE PATENTSCHRIFT

(11) **EP 0 654 440 B2**
(45) Veröffentlichungstag und Bekanntmachung des Hinweises auf die Entscheidung über den Einspruch: **22.01.2003**
(45) Hinweis auf die Patenterteilung: 19.08.1998
(21) Anmeldenummer: 94116033.5
(22) Anmeldetag: 12.10.1994
(51) Int. Cl.: C01B 15/10

(54) **Verfahren zur Herstellung von abriebfestem Natriumpercarbonat mit hoher Lösegeschwindigkeit**
Process for the preparation of abrasion resistant sodium percarbonate with high dissolving speed
Procédé de préparation de percarbonate de sodium résistant à l'abrasion et ayant une vitesse élevée de dissolution

(30) Priorität: 10.11.1993 DE 4338401
(43) Veröffentlichungstag der Anmeldung: 24.05.1995
(73) Patentinhaber: Degussa AG, 40474 Düsseldorf (DE)
(72) Erfinder: Schütte, Rüdiger, Dr., D-63755 Alzenau (DE); Bertsch-Frank, Birgit, Dr., D-79618 Rheinfelden (DE); Lebert, Jochen, B-2930 Brasschaat (BE); Schubert, Peter, Dr., D-79639 Grenzach-Wyhlen (DE); Lieser, Thomas, Dr., D-63457 Hanau (DE)

(56) Entgegenhaltungen:
- AT-B- 391 121
- DE-A- 2 733 935
- DE-B- 2 328 803
- GB-A- 1 300 855
- GB-A- 1 403 449
- GB-A- 1 581 465

## Beschreibung

Die Erfindung richtet sich auf ein Verfahren zur Herstellung von Natriumpercarbonat, das bei hohem Aktivsauerstoffgehalt gleichzeitig eine hohe Abriebbeständigkeit und eine hohe Lösegeschwindigkeit aufweist.

Zur Herstellung von Natriumpercarbonat der Formel 2 Na₂CO₃ • 3 H₂O₂ sind unterschiedliche Verfahren bekannt. Die Staffeigenschaften des Natriumpercarbonats hängen in erheblichem Umfang vom verwendeten Verfahren ab.

Ein technisch genutztes Verfahrensprinzip beruht auf der Umsetzung von Natriumcarbonat mit Wasserstoffperoxid in wäßriger Phase und Kristallisation des Natriumpercarbonats. Dieses Verfahren umfaßt im allgemeinen die Stufen
(a) Zusammenbringen einer wäßrigen Wasserstoffperoxidlösung mit einer Natriumcarbonat, Natriumchlorid und gegebenenfalls weitere Hilfsstoffe enthaltenden wäßrigen Lösung oder Suspensionen,
(b) Auskristallisieren von Natriumpercarbonat,
(c) Abtrennen des auskristallisierten Natriumpercarbonats von der Mutterlauge,
(d) Zugabe von Natriumcarbonat und nach Bedarf Natriumchlorid und weiteren Hilfsstoffen zu einem Teil der gegebenenfalls zuvor gereinigten Mutterlauge und Rückführung der so aufgestockten Lösung oder Suspension in Stufe (a).

Bezüglich der Einzelheiten dieses Verfahrensprinzips wird auf die DE-OS 23 28 803, DE-OS 26 52 776, DE-PS 28 00 760 verwiesen.

Das durch Kristallisationsverfahren der vorgenannten Art gewonnene Natriumpercarbonat weist einen befriedigenden Aktivsauerstoffgehalt (Oa) auf - Oa technischer Produkte etwa 14 %. Der Kristallaufbau ist strahlenförmig und bedingt einerseits eine erwünscht hohe Lösegeschwindigkett, andererseits aber einen oft unerwünscht hohen Abrieb, der Probleme bet der pneumatischen Förderung verursachen kann. Bezüglich des durch Kristallisation gewonnenen Natriumpercarbonats besteht somit ein großes Interesse, die Abriebfestigkett zu erhöhen, ohne die hohe Lösegeschwindigkeit und den hohen Oa-Gehalt nennenswert negativ zu beeinflussen.

Ein weiteres Verfahrensprinzip zur Herstellung von Natriumpercarbonat, das zu einem Produkt mit guter Abriebfestigkeit führt, besteht darin, in eine Wirbelschicht, die Keime enthält, deren Abmessungen geringer sind als die des herzustellenden Produkts, eine wäßrige Wasserstoffperoxidlösung und eine wäßrige Natriumcarbonatiösung einzuführen und das eingebrachte Wasser zu verdampfen. Bezüglich unterschiedlicher Ausführungsformen dieses Verfahrens wird auf die FR-PS 20 76 430, die DE-OS 27 33 935 und die DE-Patentanmeldung P 43 29 205.4 verwiesen.

Aus DE 27 33 935 A1 ist ein Verfahren zur Herstellung von Natriumpercarbonat durch Imprägnieren von Keimen mit einer Natriumpercarbonat enthaltenden wäßrigen Lösung in einem Wirbelschichttrockner bekannt. Die Keime weisen einen wesentlich geringeren Teilchendurchmesser auf als die hergestellten Partikel.

Der Aufbau des nach den vorerwähnten Wirbelschichtverfahren hergestellten Natriumpercarbonat ist im wesentlichen kugelig und dicht. Trotz eines befriedigenden Oa-Gehalts und einer hohen Abriebbeständigkeit weisen nach diesem Verfahrensprinzip hergestellte Produkte einen anwendungstechnischen Nachteil auf, indem die Lösegeschwindigkeit gegenüber durch Kristallisation gewonnenen Produkten wesentlich verlangsamt ist, so daß in der Waschlauge der Aktivsauerstoff nur mit Verzögerung aus dem Natriumpercarbonat freigesetzt wird.

Im Verfahren gemäß AT 391 121 B werden stabilisierte Natriumpercarbonat-Granulate, nicht aber umhüllte Natriumpercarbonatpartikel hergestellt. Wesentliches Verfahrensmerkmal ist die Mitverwendung einer Natriumpercarbonatsuspension, welche gleichzeitig mit einer Wasserstoffperoxid und Soda enthaltenden Lösung auf Kristallkeime aufgebracht wird.

Aufgabe der Erfindung ist somit, ein Verfahren zur Herstellung von Natriumpercarbonat aufzuzeigen, das zu einem Produkt führt, das neben einem hohen Oa-Gehalt sowohl eine hohe Lösegeschwindigkeit als auch eine hohe Abriebfestigkeit aufweist.

Gefunden wurde ein Verfahren zur Herstellung von abriebfestem Natriumpercarbonat mit hoher Lösegeschwindigkeit gemäß unabhangigen Anspruch 1.

Das nach dem erfindungsgemäßen Verfahren erhältliche Natriumpercarbonat das durch den unabhängigen Anspruch 5 definiert ist, besteht aus einem Kern aus einem durch ein Kristallisationsverfahren erzeugten Natriumpercarbonat und einer in einem Wirbelschichtverfahren aufgebrachten Natriumpercarbonat-Hüllschicht, welche 1 bis 20 Gew.-%, bezogen auf den Natriumpercarbonat-Kern ausmacht. Mittels der Umhüllung werden Poren ausgefüllt und Kristallkanten und -ecken überdeckt, so daß eine hohe Abriebfestigkeit erzielt wird.

Bereits wenige Gew.-% Umhüllung reichen für den Erhalt einer hohen Abriebfestigkeit aus. Vorzugsweise beträgt die Natriumpercarbonat-Umhüllung 3 bis 10 Gew.-%, bezogen auf den Kern. Durch die dünne Hüllschicht wird die Lösegeschwindigkeit nicht nennenswert beeinflußt, so daß die von durch Kristallisation gewonnenem Natriumpercarbonat bekannte hohe Lösegeschwindigkeit im wesentlichen erhalten bleibt. Durch die erfindungsgemäße Umhüllung mit Natriumpercarbonat wird zudem der Oa-Gehalt nicht gemindert, sondern vielfach sogar um 0,1 bis 0,2 % erhöht, so daß Produkte mit einem Oa-Gehalt um/über 14 Gew.-% gut erhältlich sind.

Es war nicht vorhersehbar, daß sich durch die technisch in einfacher Weise realisierbare Umhüllung des Natriumpercarbonats in der Wirbelschicht mit einer, bezogen auf den Kern, geringen Hüllmenge Natriumpercarbonat ein Natriumpercarbonat mit hohem Oa-Gehalt, hoher Abriebfestigkeit und hoher Lösegeschwindigkeit erhalten läßt. Durch die im wesentlichen geschlossene Oberflächenstruktur ist das Produkt zusätzlich einem geringeren Angriff von lagerstabilitätsmindernden Stoffen ausgesetzt, so daß die Lagerstabilität erfindungsgemäß hergestellten Natriumpercarbonats höher ist als jene des nicht umhüllten, allein durch Kristallisation gewonnenen Natriumpercarbonatkerns.

Sofern erwünscht, ist es auch möglich, zusammen mit oder nach dem Aufbringen der Umhüllung aus Natriumpercarbonat bekannte Aktivsauerstoffstabilisatoren aufzubringen, so daß sich diese Stabilisatoren innerhalb oder auf der Hüllschicht aus Percarbonat befinden. Bevorzugt werden hüllbildende Stabilisatoren aus der Reihe Natriumcarbonat, Magnesiumsalze, Alkalisilikate, Borate und Perborate unter Verwendung einer oder mehrerer wäßriger Lösungen in der Wirbelschicht auf die Percarbonatumhüllung aufgebracht. Um den Oa-Gehalt nicht wesentlich abzusenken, wird die Menge dieser zusätzlichen Umhüllung niedrig gehalten, beispielsweise zwischen 1 und 10 Gew.-%.

Zur Durchführung des Verfahrens kommen übliche Vorrichtungen zur Wirbelschichttrocknung infrage, insbesondere zylinderförmige oder rinnenförmige Wirbelschichttrockner, welche mit Sprühdüsen zum Versprühen der Hüllkomponenten oder deren Reaktanden enthaltenden wäßrigen Lösungen ausgestattet sind. Da die auf den Kern aufzubringende Hüllmenge gering ist, kann das Verfahren einfach in mehrzonigen rinnenförmigen Fließbetttrocknern, wie sie ohnehin oft zur Trocknung von durch Kristallisation gewonnenem Natriumpercarbonat im Einsatz sind, durchgeführt werden: Hierbei wird in der oder in den ersten Zonen das kristallisierte Produkt besprüht und in der letzten Zone zu Ende getrocknet.

Um eine gleichförmige Umhüllung des Kerns mit Natriumpercarbonat zu erzielen, ist es besonders zweckmäßig, eine konzentrierte wäßrige Sodalösung und eine wäßrige Wasserstoffperoxidlösung unter Verwendung einer Dreistoffdüse mit externer Mischung der Lösungen und Luft als Treibmittel zu versprühen. Die Mengenströme werden so gewählt, daß das Molverhältnis von Na₂CO₃ zu H₂O₂ etwa 2 zu 3 beträgt; die Verwendung eines geringen H₂O₂-Unteroder vorzugsweise Überschusses - bis zu 10 % - ist möglich. Eine besonders vorteilhafte Ausführungsform des Sprühprozesses unter Verwendung einer Dreistoffdüse sowie der Aufbau der Dreistoffdüse sind der DE-Patentanmeldung P 43 29 205.4 zu entnehmen. Durch die Verwendung einer vererwähnten Dreistoffdüse wird eine sichere und gleichmäßige Durchmischung der Lösungen erzielt; ein phosphorhaltiger Kristallisationsinhibitor ist zudem nicht erforderlich.

### Beispiele 1 und 2 und Vergleichsbeispiel

Durch ein Kristallisationsverfahren unter Verwendung einer Kochsalz und Natriumhexametaphosphat enthaltenden wäßrigen Phase gewonnenes Natriumpercarbonat mit einer Restfeuchte von 8 Gew.-% wurde in einem rinnenförmigen Wirbelschichttrockner getrocknet (=Vergleichsbeispiel VB) beziehungsweise mit unterschiedlichen Mengen einer Natriumpercarbonat bildenden Lösung besprüht und getrocknet (=Beispiele 1 und 2).

Der Wirbelschichttrockner umfaßte eine Sprühzone (S) (0,5 m²) und eine Trocknungszone (T). Die Temperaturen der Zuluft zu und Abluft aus diesen Zonen (T_{S/zu} und T_{T/zu}; T_{S/ab} und T_{T/ab}) folgen aus der Tabelle, desgleichen die Massenströme des zu- und abgeführten Natriumpercarbonats (NaPc) und der Sprühlösung. Bei der Sprühlösung handelt es sich um ein Gemisch aus einer wäßrigen Sodalösung (30 Gew.-%) und wäßrigen Wasserstoffperoxidlösung (70 Gew.-%), welche mittels einer Dreistoffdüse mit externer Mischung der Lösungen und Luft als Treibmittel versprüht wurden; das Molverhältnis Na₂CO₃ zu H₂O₂ in den beiden Lösungen betrug 2 zu 3, der Natriumpercarbonatgehalt im Gemisch 36,9 Gew.-%.

**Tabelle**

| Beispiel Nr. | VB | 1 | 2 |
|---|---|---|---|
| NaPc/zu (kg/h) | 1130 | 910 | 350 |
| Sprühlösung (kg/h) | 0 | 150 | 220 |
| NaPc/ab (kg/h) | 1070 | 920 | 420 |
| T_{S/zu} (°C) | 120 | 200 | 300 |
| T_{T/zu} (°C) | 100 | 160 | 100 |
| T_{S/ab}^{*)} (°C) | 50 | 55 | 65 |
| T_{T/ab}^{*)} (°C) | 60 | 65 | 65 |

| Produkt: | | | |
|---|---|---|---|
| Oa-Gehalt^{**)} (%) | 13,9 | 14,0 | 14,1 |
| Lösezeit ^{***)} (min) | 1,05 | 1,22 | 1,9 |
| Abrieb (%) (ISO 5937) | 6,1 | 2,8 | 2,4 |

| | | | |
|---|---|---|---|
| ^{*)} Die getrennt geführte Abluft aus der Sprühzone und Trocknungszone entspricht etwa der jeweiligen Wirbelschichttemperatur | | | |
| ^{**)} Oa (%) = Aktivsauerstoffgehalt | | | |
| ^{***)} Bestimmt bei 15 °C und 2 g NaPc pro 1 Wasser | | | |

Die Beispiele zeigen, daß der Abrieb durch das erfindungsgemäße Verfahren wesentlich reduziert werden kann. Bereits eine Umhüllung mit etwa 6 Gew.-% Hüllmaterial (=Beispiel 1) führt zu einem abriebfesten Produkt bei weiterhin geringer Lösezeit. Bei einer weiteren Steigerung der Hüllmenge auf (Beispiel 2: ca. 18 %) nimmt die Abriebfestigkeit nur noch wenig ab bei gleichzeitigem Anstieg der Lösezeit.

## Patentansprüche

1. Verfahren zur Herstellung von abriebfestem Natriumpercarbonat mit hoher Lösegeschwindigkeit, umfassend das Aufbringen einer Hüllschicht auf Natriumpercarbonatpartikel, welche durch ein Kristallisationsverfahren, umfassend die Stufen Auskristallisieren von Natriumpercarbonat aus wäßriger Phase und Abtrennen desselben von der Mutterlauge, gewonnen wurden, durch Besprühen der Natriumpercarbonatpartikel mit einer Natriumpercarbonat und gegebenenfalls weitere Hüllkomponenten enthaltenden wäßrigen Lösung oder gleichzeitig mit einer wäßrigen Wasserstoffperoxidlösung und einer wäßrigen Natriumcarbonatlösung, wobei das Molverhältnis von Na₂CO₃ zu H₂O₂ in den beiden Lösungen im wesentlichen 2 zu 3 beträgt und die beiden Lösungen weitere Hüllkomponenten enthalten können, in einer Wirbelschicht bei einer Wirbelschichttemperatur im Bereich von 40 bis 95 °C und gleichzeitiges Verdampfen von Wasser,
**dadurch gekennzeichnet,**
**daß** man auf die Natriumpercarbonatpartikel eine Natriumpercarbonat-Hüllschicht in einer Menge von 1 bis 20 Gew.-%, bezogen auf die eingesetzten Natriumpercarbonatpartikel, aufbringt.

2. Verfahren nach Anspruch 1,
**dadurch gekennzeichnet,**
**daß** man die Natriumpercarbonatpartikel unter Verwendung einer Dreistoffdüse mit externer Mischung der Wasserstoffperoxidlösung mit der Natriumcarbonatlösung und einem Treibgas, vorzugsweise Luft, mit den genannten Lösungen besprüht.

3. Verfahren nach Anspruch 1 oder 2,
**dadurch gekennzeichnet,**
**daß** die Menge der Hüllschicht 3 bis 10 Gew.-% der verwendeten Natriumpercarbonatpartikel ausmacht

4. Verfahren nach Anspruch 1 bis 3,
**dadurch gekennzeichnet,**
**daß** man gleichzeitig mit oder nach dem Aufbringen des Natriumpercarbonats weitere Hüllkomponenten aufbringt, wobei diese in der Natriumpercarbonatumhüllung eingeschlossen sind oder eine oder zwei zusätzliche Hüllschichten auf der Natriumpercarbonatumhüllung bilden.

5. Abriebfestes umhülltes Natriumpercarbonat mit hoher Lösegeschwindigkeit, erhältlich durch Aufbringen einer Hüllschicht auf Natriumpercarbonatpartikel, welche durch ein Kristallisationsverfahren, umfassend die Stufen Auskristallisieren von Natriumpercarbonat aus wäßriger Phase und Abtrennen desselben von der Mutterlauge, gewonnen wurden, durch Besprühen der Natriumpercarbonatpartikel mit einer Natriumpercarbonat und gegebenenfalls weitere Hüllkomponenten enthaltenden wäßrigen Lösung oder gleichzeitig mit einer wäßrigen Wasserstoffperoxidlösung und einer wäßrigen Natriumcarbonatlösung, wobei das Molverhältnis von Na₂CO₃ zu H₂O₂ in den beiden Lösungen im wesentlichen 2 zu 3 beträgt und die beiden Lösungen weitere Hüllkomponenten enthalten können, in einer Wirbelschicht bei einer Wirbelschichttemperatur im Bereich von 40 bis 95 °C und gleichzeitiges Verdampfen von Wasser,
**dadurch gekennzeichnet,**
**daß** die Menge der aufgebrachten Natriumpercarbonat-Hüllschicht 1 bis 20 Gew.-%, bezogen auf die eingesetzten Natriumpercarbonatpartikel, ausmacht.

6. Natriumpercarbonat nach Anspruch 5,
**dadurch gekennzeichnet,**
**daß** die Natriumpercarbonat-Umhüllung 3 bis 10 Gew.-% ausmacht.

## Claims

1. A process for the production of abrasion resistant sodium percarbonate having an elevated rate of dissolution, comprising the application of an outer shell onto sodium percarbonate particles, which were obtained by a crystallisation process comprising the stages crystallisation of sodium percarbonate from the aqueous phase and separation thereof from the mother liquor, by spraying the sodium percarbonate particles with an aqueous solution containing sodium percarbonate and optionally further shell components or simultaneously with an aqueous hydrogen peroxide solution and an aqueous sodium carbonate solution, wherein the molar ratio of Na₂CO₃ to H₂O₂ in the two solutions is substantially 2:3 and the two solutions may contain further shell components, in a fluidised bed at a fluidised bed temperature in the range from 40 to 95°C and simultaneously vaporising water,
**characterised in that**
a sodium percarbonate outer shell is applied onto the sodium percarbonate particles in a quantity of 1 to 20 wt.% of the sodium percarbonate particles used.

2. A process according to claim 1,
**characterised in that**
the sodium percarbonate particles are sprayed with the stated solutions using a three-fluid nozzle with external mixing of the hydrogen peroxide solution with the sodium carbonate solution and a propellant gas, preferably air.

3. A process according to claim 1 or 2,
**characterised in that**
the quantity of the outer shell amounts to 3 to 10 wt.% of the sodium percarbonate particles used.

4. A process according to claims 1 to 3,
**characterised in that**
further shell components are applied simultaneously with or after application of the sodium percarbonate, wherein these components are enclosed in the sodium percarbonate shell or form one or two additional outer shells on the sodium percarbonate shell.

5. A sodium percarbonate provided with an abrasion resistant shell and having an elevated rate of dissolution obtainable by application of an outer shell onto sodium percarbonate particles, which were obtained by a crystallisation process comprising the stages crystallisation of sodium percarbonate from the aqueous phase and separation thereof from the mother liquor, by spraying the sodium percarbonate particles with an aqueous solution containing sodium percarbonate and optionally further shell components or simultaneously with an aqueous hydrogen peroxide. solution and an aqueous sodium carbonate solution, wherein the molar ratio of Na₂CO₃ to H₂O₂ in the two solutions is substantially 2:3 and the two solutions may contain further shell components, in a fluidised bed at a fluidised bed temperature in the range from 40 to 95°C and simultaneously vaporising water,
**characterised in that**
the quantity of sodium percarbonate outer shell applied amounts to 1 to 20 wt.%, relative to the sodium percarbonate particles used.

6. A sodium percarbonate according to claim 5,
**characterised in that**
the sodium percarbonate outer shell amounts to 3 to 10 wt.%.

## Revendications

1. Procédé de fabrication de percarbonate de sodium résistant à l'abrasion, ayant une vitesse élevée de dissolution, comprenant l'application d'une couche d'enrobage sur des particules de percarbonate de sodium, qui ont été produites par un procédé de cristallisation comprenant les phases de cristallisation de percarbonate de sodium de la phase aqueuse et séparation de celui-ci de la solution-même, par pulvérisation des particules de percarbonate de sodium avec une solution aqueuse contenant du percarbonate de sodium et le cas échéant d'autres composants d'enrobage, ou en même temps avec une solution aqueuse de peroxyde d'hydrogène et une solution aqueuse de carbonate de sodium, dans lesquelles le rapport molaire de CO₃Na₂ à H₂O₂ dans les deux solutions s'élève essentiellement de 2 à 3, les deux solutions pouvant renfermer d'autres composants d'enrobage, en un lit fluidisé à une température de lit fluidisé dans la plage de 40 à 95°C et évaporation simultanée de l'eau,
**caractérisé en ce qu'**
on applique sur les particules de percarbonate de sodium une couche d'enrobage à base de percarbonate de sodium en une quantité allant de 1 à 20 % en poids, rapporté aux particules de percarbonate de sodium mises en oeuvre.

2. Procédé selon la revendication 1,
**caractérisé en ce qu'**
on pulvérise les particules de percarbonate de sodium en utilisant une buse pour trois substances avec mélange externe de la solution de peroxyde d'hydrogène avec la solution de carbonate de sodium et un gaz propulseur, de préférence l'air, avec les solution mentionnées.

3. Procédé selon la revendication 1 ou la revendication 2,
**caractérisé en ce que**
la quantité de la couche d'enrobage représente de 3 à 10 % en poids des particules de percarbonate de sodium utilisées.

4. Procédé selon les revendications 1 à 3,
**caractérisé en ce qu'**
on applique en même temps avec ou après l'application du percarbonate de sodium d'autres composants d'enrobage, ceux-ci étant inclus dans l'enrobage de percarbonate de sodium, ou formant une ou deux couches supplémentaire d'enrobage sur l'enrobage de percarbonate de sodium.

5. Percarbonate de sodium enrobé, résistant à l'abrasion et ayant une vitesse élevée de dissolution, accessible par application d'une couche d'enrobage sur des particules de percarbonate de sodium qui ont été produites par un procédé de cristallisation comprenant les phases de cristallisation du percarbonate de sodium de la phase aqueuse et séparation de celui-ci de la solution-même, par pulvérisation des particules de percarbonate de sodium avec une solution aqueuse contenant le percarbonate de sodium et le cas échéant d'autres composants d'enrobage, ou simultanément avec une solution aqueuse de peroxyde d'hydrogène et une solution aqueuse de carbonate de sodium, dans lesquelles le rapport molaire de CO₃Na₂ à H₂O₂ dans les deux solutions, s'élève essentiellement de 2 à 3, les deux solutions pouvant renfermer d'autres composants d'enrobage, dans un lit fluidisé à une température de lit fluidifié dans la plage allant de 40 à 95°C, et évaporation simultanée de l'eau,
**caractérisé en ce que**
la quantité de couche d'enrobage de percarbonate de sodium appliquée, représente de 1 à 20 % en poids, rapporté aux particules de percarbonate de sodium mises en oeuvre.

6. Percarbonate de sodium selon la revendication 5,
**caractérisé en ce que**
l'enrobage de percarbonate de sodium représente de 3 à 10 % en poids.
